# EUROPEAN PATENT APPLICATION

(11) **EP 1 767 470 A2**
(43) Date of publication of application: **28.03.2007**
(21) Application number: 06121109.0
(22) Date of filing: 22.09.2006
(51) Int. Cl.: B65F 1/14

(54) **Method and device for collecting glass containers**

(30) Priority: 23.09.2005 IT MO20050240
(71) Applicant: Mancaniello, Guerino, 41015 Nonantola MO (IT)
(72) Inventor: Mancaniello, Guerino, 41015 Nonantola MO (IT)
(74) Representative: Luppi, Luigi

(57) **Abstract**

A method comprises: identifying a user of a device (1) arranged for collecting glass bottles (2), enabling said user to insert a quantity of said glass bottles (2) in said device (1), determining a weight of said quantity and subsequently assigning said weight to said user; a device for collecting glass bottles (2) comprises: internal chamber means arranged for receiving said glass bottles (2) and communicating with the exterior through inlet opening means (9), characterised in that it further comprises external chamber means (15, 115, 315; 17, 117, 217), made outside said internal chamber means and defining external complementary containers arranged for receiving glass objects different from said bottles (2), for example glass and crystal glass scraps (18), flat glass sheets (19) to be scrapped and/or objects made of materials different from glass, for example bags made of paper or cardboard or plastic.

## Description

The invention relates to a method, and a respective device, for recovering intact glass bottles, plane glass and glass scrap eliminated by users.

For some time a method for recovering raw materials from urban solid waste has been known and used that is called "separated collection", according to which users separate materials to be eliminated on the basis of the physical and/or chemical properties of the latter, and discharge the materials, which have been thus separated, into arranged containers. The latter are then periodically removed and emptied by operators of the companies dealing with separated collection.

The above disclosed method enables some of the waste-forming materials to be easily recycled, such as for example glass, crystal glass, paper, cardboard or plastics, which materials can thus be industrially transformed and used again. In this way, industries can significantly save costs that are necessary for obtaining raw materials and/or avoid removing raw materials from the natural environment, as it occurs, for example, in the paper industry.

Furthermore, the separated collection enables the environmental impact to be significantly reduced that is caused by materials which, if not recycled, would be amassed in (not always suitable) dumps, both controlled and illegal, and/or be thermally destroyed in incinerators and/or even dispersed in the environment.

Amongst the containers used for separate waste collection, specific containers are known for collecting paper and containers intended for collecting glass. The latter are usually bell-shaped and have an upper portion in which round openings are obtained through which a user can insert and drop inside the container glass bottles and/or glass cans. Italian patent application number MO91A000084 discloses a device for collecting glass bottles, inside which device rotating support elements are arranged. These supporting elements are provided with slanting arms, onto which the single bottles can be inserted and which can be reached by the user through a proper vertical opening made in the device. In this way, the bottles that have been put in the container do not break, as it occurs typically in bell-shaped containers of known type, but they can be recovered intact and reutilised, after they have been sorted by type and subsequently washed and/or sterilised.

A drawback of the known bell-shaped containers and/or devices consists in that the latter are able to receive only hollow glass scrap. Therefore, if a bag made of paper, plastic or other material is used for carrying the bottles to be eliminated to the bell-shaped container, the user often has to look for containers arranged elsewhere in order to eliminate the bag.

This causes a substantial waste of time and physical energy and may be significantly uncomfortable, in particular for an elderly user and/or having health problems.

Another drawback consists of the fact that known bell-shaped containers are not always able to receive in a suitable manner the scraps for which they are intended. For example, a user can discharge into a bell-shaped container glass bottles and/or glass fragments having small dimensions, but he cannot insert into the container a glass sheet or another glass object having such a shape and/or dimensions as not to be able to pass through the reduced openings of the known container. These glass objects or sheets are consequently left near the bell-shaped containers, which makes collecting scrap uncomfortable for the operators. In fact, while bell-shaped containers are provided with an eyelet through which they can be mechanically lifted and loaded onto a motor vehicle, glass material left outside the containers has to be collected by hand, thus constituting a potential cause of accident.

Finally, since the users are not always motivated to eliminate various materials in a differentiated manner, a significant need is felt in order to create incentives such as to stimulate users to cooperate more with separate collecting procedures, so as to reduce at least partially the amount of urban solid waste.

An object of the invention is to improve known methods of separate collection.

Another object is to improve methods used for recovering hollow glass containers that have been eliminated by the users.

A further object is to provide for a method for recovering glass containers, in particular bottles, which rewards users in such a way as to incentivate the cooperation thereof.

Another further object is to reduce the waste of time and physical energy needed by a user in order to eliminate in a suitable manner bags made of plastics, or of other material, which are used by the user for carrying the glass and/or the bottles up to the arranged containers.

A still other object is to improve known devices for separate glass collection.

A still further other object is to provide a device for performing separate glass collection, which device is able to receive both plane glass and/or crystal glass.

In a first aspect of the invention, a method is provided, comprising:
- identifying a user of a device arranged for collecting glass containers;
- enabling said user to insert an amount of said glass containers into said device;
- determining a weight of said amount.

In an embodiment, the total weight of the glass containers delivered by a user is recorded and associated with the latter.

Owing to this aspect, a method for recovering glass material is made available that is able to significantly stimulate a user to use the devices arranged for receiving glass containers.

In fact, the collecting device identifies the user, weighs the amount of glass material that the user discharged and subsequently assigns the weighed amount to the latter. As a result, a company that deals with separate collection can record the amount of glass containers, for example bottles, which a certain user delivered at a certain container over a preset period of time. These data, collected by the company, are then sent to the competent authority, which dispenses to the user a benefit, for example a financial benefit. The benefit may consist, for example, of a percentage reduction (proportional to the amount of delivered glass) of the charges due for urban solid waste disposal. This procedure can be applied also to other recyclable materials.

In this way, each user can benefit from a financial saving that is proportional to the total weight of the glass bottles, which the user eliminated by complying fully with the procedures set by, for example, the public authority.

In a second aspect of the invention, a device for collecting glass containers is provided, comprising inner chamber means, which is arranged for receiving said glass containers and communicates with the outside through inlet opening means, characterised in that it further comprises outer chamber means, made outside said inner chamber means and arranged for receiving glass object that are different from said containers and further object made in materials that are different from glass.

In an embodiment, the device takes the form of a bell-shaped container.

Owing to this aspect, a user can discharge into a single device both glass bottles, which are introduced into the inner chamber means, and the (properly folded) cardboard boxes or the paper or plastics bags used for carrying the bottles to the device, which are inserted into the outer chamber means.

In this way, after having eliminated the glass containers, the user does not have to consume time and effort for reaching other containers, which are intended for receiving materials that are different from glass.

Furthermore, the outer chamber means can also be made in such a way that they can receive glass objects and/or glass scrap which are different from bottles, for example plane glass or crystal glass sheets and/or fragments of plane glass or crystal glass sheets. Consequently, a user does not need anymore to leave these objects and/or scrap outside the bell-shaped container and the subsequent collecting tasks can proceed comfortably and without any risk of accident.

In a third aspect of the invention a box container is provided that is arranged for receiving objects made of yieldable material, said box container comprising compacting means arranged for compacting said objects inside said box container.

Owing to this aspect, a box container is made available the capacity of which can be exploited in an optimal manner and in which it is possible to accumulate, for example, a significant quantity of bags made of paper or plastics. It is possible to equip a device for collecting glass containers with this box container, so as to enable the bags made of plastics or paper used for conveying the glass containers to be disposed of rapidly and comfortably.

In a fourth aspect of the invention, a device is provided for collecting glass containers, which comprises internal chamber means arranged for receiving said glass containers and communicating with the exterior through inlet opening means, characterised in that said internal chamber means is provided with tubular element means arranged in a radial manner and shaped in such a way as to be able to contain said glass containers.

Owing to this aspect, a device is made available for collecting glass bottles that is able to contain a significantly high number of intact bottles in a substantially reduced space.

Further, the radial tubular elements enable the bottles to be discharged into the device in a substantially rapid and comfortable manner.

The invention will be better understood and carried into effect with reference to the attached drawings, in which some embodiments of the inventions are shown by way of nonlimiting example, in which:
Figure 1 shows a schematic and partially sectioned front view of a device for collecting glass bottles, which is provided with weighing means and user-identifying means;
Figure 2 shows a schematic front view of an embodiment of the device in Figure 1, which is provided with outer chamber means;
Figure 3 is a cross section taken along the III-III plane of Figure 2;
Figure 4 is a schematic rear view of a device like that in Figure 2, which is provided with another embodiment of the outer chamber means;
Figure 5 is a cross section taken along the IV-IV plane of Figure 4;
Figure 6 is a perspective view of a device like that in Figure 2, which is provided with another embodiment of the outer chamber means;
Figure 7 is a further perspective view of the device in Figure 6;
Figure 8 is a schematic and partially sectioned side view of the device in Figure 1, provided with an embodiment of the external camera means comprising compacting means;
Figure 9 is a frontal, enlarged, fragmentary and incomplete view of the external chamber means in Figure 8;
Figure 10 is an enlarged, fragmentary and incomplete plan view of the external chamber means of Figure 8;
Figure 11 is a schematic longitudinal section showing a further embodiment of the device in Figure 1;
Figure 12 is a schematic cross section taken along the plane XII-XII of Figure 11;
Figure 13 is a schematic cross section taken along the plane XIII-XIII of figure 11;
Figure 14 is a schematic frontal view of the device in Figure 11.

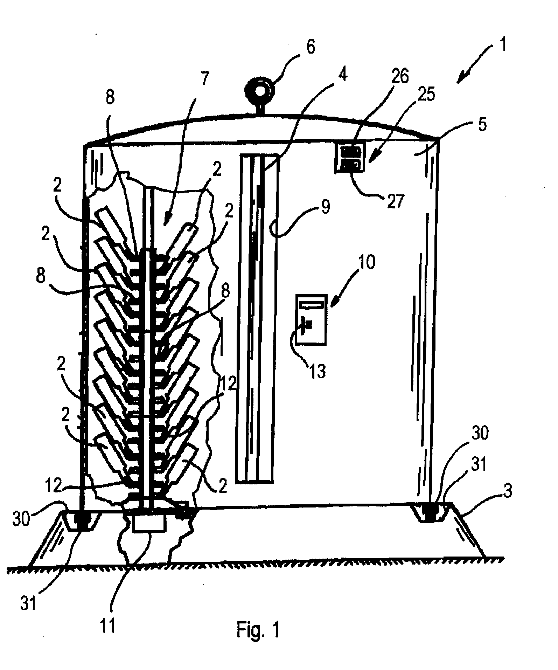

With reference to Figure 1, a device 1 is provided for collecting glass containers, in particular bottles 2, which is made in a manner that is substantial analogous to the device disclosed in Italian patent application no. MO91A000084 and is modified in such a way as to enable the method provided by the invention to be performed. The device 1 comprises a casing 5, associated with a base 3 by means of an axial stay rod 4. At one end of the stay rod 4, opposite the base 3, a lifting eyelet 6 is made, through which the device 1 can be hooked to mechanical lifting means of known type and can be loaded onto or unloaded from a vehicle.

The casing 5 can rotate in a clockwise or anticlockwise direction with respect to the base 3 by means of a plurality of spherical elements 30 rotating inside a peripheral groove 31, which is obtained in the base 3. The bottom of the peripheral groove 31 communicates with a collecting vat, that is not shown, obtained inside the base 3. Into the collecting vat flow any small volumes of liquid substances, for example washing water, which are contained in the bottles 2 and exit from the latter when a user inserts the upturned bottles 2 in the device 1.

On a face of the base 3, which, in use, is turned towards the lifting eyelet 6, a plurality of rotatable supports 7 is mounted (only one of which is shown for sake of clarity), each of which comprises a set of pans 8, which are mutually superimposed and are provided with slanting arms 12, onto which the upturned bottles 2 can be inserted. An inlet opening 9, shaped as a vertical slit and obtained in the casing 5, enables a user to insert the bottles 2 inside the device 1.

In an embodiment that is not shown, the inlet opening 9 is provided with a door, which can be opened manually by the user.

In a base portion of each of the rotatable supports 7 a weighing unit is installed, for example a load cell 11 of known type. Each known cell 11 is sufficiently sensitive to record the weight variations (weight increments) produced every time a bottle 2 is inserted onto a corresponding arm 12.

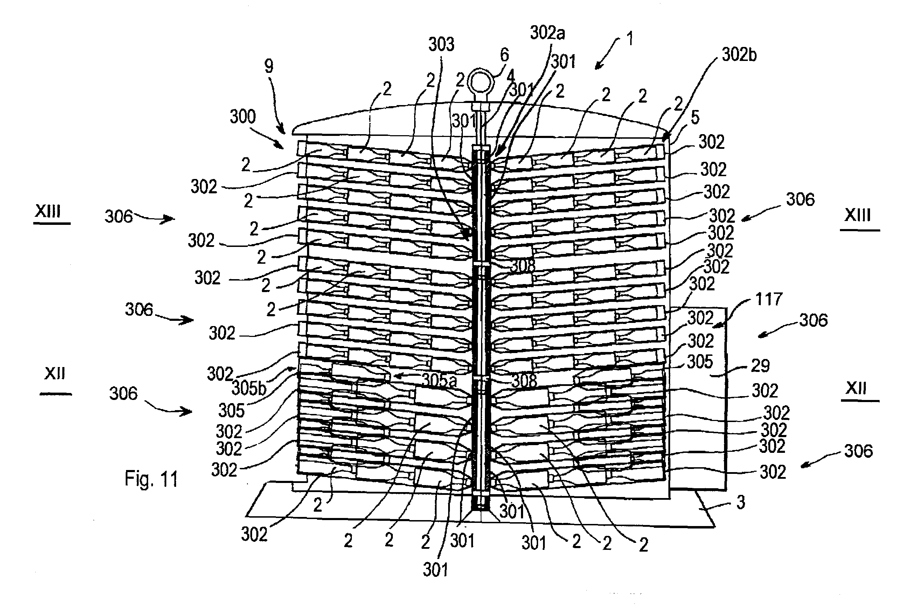

Figures 11 to 14 show an embodiment of the device 1 in which the plurality of rotatable supports 7 is replaced with a single radial rotatable support 300. The radial support 300 comprises a rod portion 303 that is coaxial with the stay rod 4 and extends from the base 3 to near the lifting eyelet 6. The rod portion 303 comprises a plurality of sleeve elements 301, which are cylindrical and have the same length and transverse diameter. The sleeve elements 301 are inserted onto the stay rod 4 so as to be mutually superimposed and coaxial to the stay rod 4. On each sleeve element 301 there are radially fixed tubular elements 302, which are made of a stiff and substantially light material, for example plastics. Each tubular element 302 has the shape of a hollow cylinder, comprising a cone-shaped closed end 302a and an open end 302b, which are mutually opposite. The closed end 302a is fixed to the sleeve element 301, whilst the open end 302b enables the bottles 2 to be inserted and/or extracted. Into each tubular element 302 it is possible to insert a number of mutually aligned bottles 2, which number is variable according to the dimensions of the bottles 2 (e.g., three or four wine or mineral-water bottles).

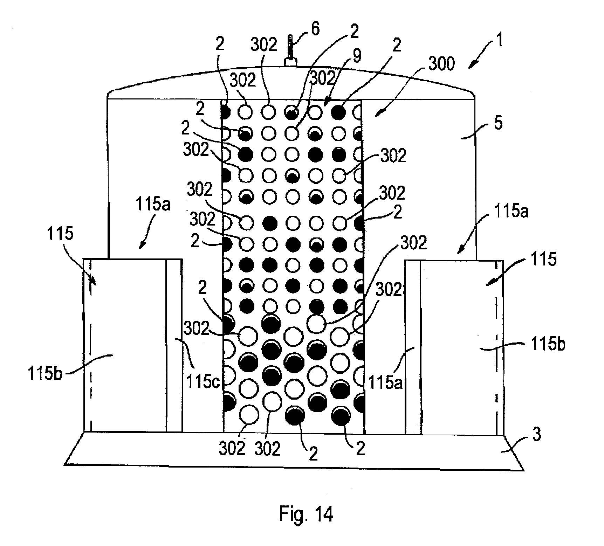

On each sleeve element 301 there are fixed eight tubular elements 302, which are angularly spaced by about 45° in relation to one another and have a length such as to enable the respective open ends 302b to reach near the inlet opening 9 (Figure 14). The latter is significantly wider than the inlet opening 9 comprised in the device 1 equipped with the rotatable supports 7. Each tubular element 302 is further fixed slantingly to the corresponding sleeve element 301, in such a way that the open end 302b is at a greater height than the closed end 302a. In this way, the space available inside the casing 5 of the device 1 is completely exploited and the bottles 2 can be inserted from the top to bottom, i.e. in a more rapid and comfortable manner. In order to enable the user to insert into a same device 1 bottles 2 having various shapes and/or dimensions, the tubular elements 302 are made with various diameters, preferably comprised between 6 and 12 centimetres.

When the radial support 300 is assembled, there are spaces that are not used both between the tubular elements 302 of each sleeve element 301 and between the tubular elements 302 of the various vertically superimposed sleeve elements 301. In order to use also these spaces, further tubular elements are provided 305, having a variable length and interposed in a staggered manner between the tubular elements 302. Each further tubular element 305 comprises a cone-shaped closed end 305a and an open end 305b, which are mutually opposite.

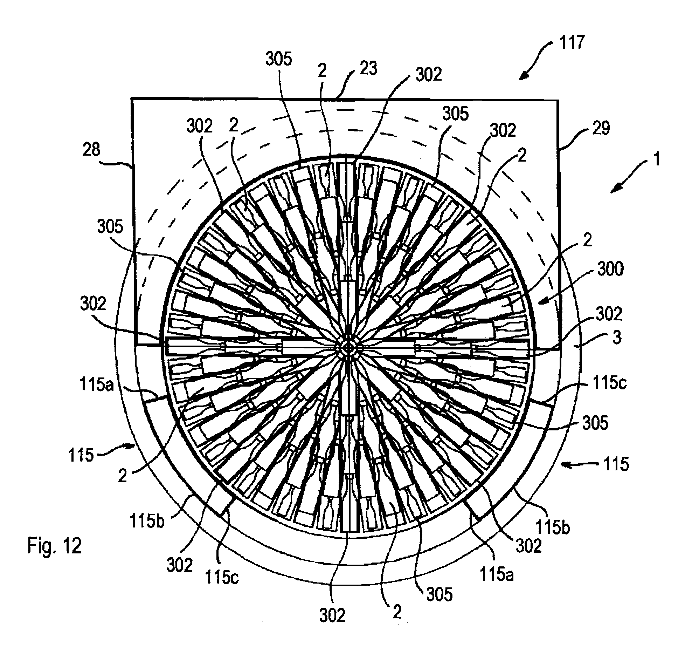

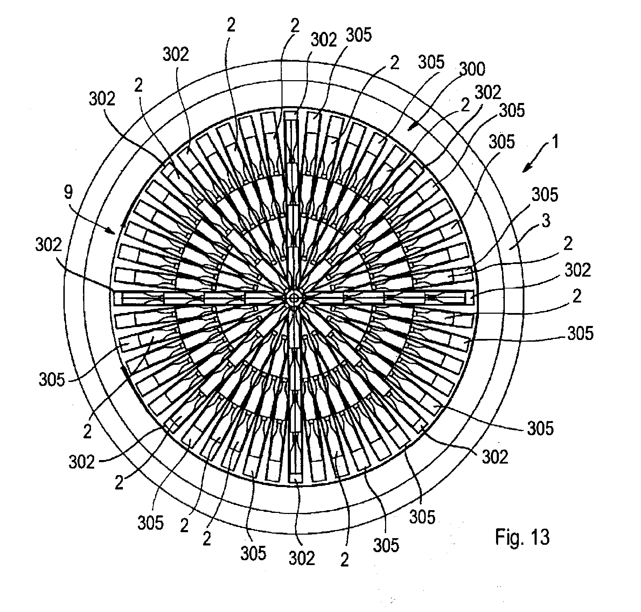

As shown in Figures 12 and 13, the further tubular elements 305 are arranged in such a way that between two tubular elements 302 that are adjacent and fixed to the same sleeve element 301 at least five further tubular elements 305 are interposed. The further tubular elements 305 have a length that is significantly less than the length of the tubular elements 302 and, similarly to the latter, they have to be arranged in such a way that the corresponding open ends 305b are near the inlet opening 9. Consequently, the further tubular elements 305 are not mounted on the sleeve elements 301 but are fixed, for example by means of gluing, outside the adjacent tubular elements 302 (Figure 11). In order to ensure that the further tubular elements 305 have sufficient space to interpose themselves between the adjacent tubular elements 302, spacer rings 308 are interposed in an opportune manner between the sleeve elements 301. Owing to the spacer rings 308 it is further possible to form groups 306 of sleeve elements 301 (Figure 11), each group 306 being able to rotate independently of the remaining groups 306. Each group 306 is provided with a weighing unit (not shown), for example a load cell of known type, which is sufficiently sensitive to record the variations (increases) in weight produced each time that a bottle 2 is received inside a tubular element 302 or a further tubular element 305.

In an embodiment that is not shown, tubular elements 302 are provided having a diameter that is equal to 6, 8 or 12 centimetres.

In another embodiment that is not shown, the rod portion 303 is formed by single sleeve element extending in length and coaxial to the stay rod 4.

On the outer surface of the casing 5, near the inlet opening 9, an identifying unit 10 is installed that is arranged for enabling a user to interact with the device 1 and has a structure and operation which vary according to the provided user-device interacting mode. Inside the casing 5 an electronic control unit (that is not shown), which is connected to both the load cells 11 and the identifying unit 10.

In an embodiment that is not shown, the electronic control unit is arranged outside the device 1.

On the outer surface of the casing 5 a signalling unit 25 is also installed, which is connected to the electronic control unit and comprises a lighting element 26 and a further lighting element 27, both of known type, for example light emitting diodes (LED). The signalling unit 25 shows the user the filling level of the device 1 and, therefore, if further bottles 2 can be inserted in the device 1. In use, the lighting element 26 in the signalling unit 25 is switched on and emits a green-coloured light in a continuous or intermittent manner until the device 1 is full to about 75% of the capacity thereof, namely until about 75% of the respective rotating supports 7 is occupied by the bottles 2. This shows an user near the device 1 that the bottles 2 can be inserted into the latter.

On the contrary, when the device 1 is full to more than 75% of the respective capacity, namely when more than 75% of rotating supports 7 is occupied by the bottles 2, in the signalling unit 25 the further lighting element 27 lights up that emits a red light in a continuous or intermittent manner. This shows the user that the device 1 is "full up" and that no more bottles 2 can be inserted into the latter.

This is made possible by the fact that the electronic control unit, which is connected to the load cells 11, detects in real time the weight increments recorded by the load cells 11. As a result, the electronic control unit is able to detect approximately the total weight produced by an amount of bottles that is such as to occupy more than 75% of the rotating supports 7 in the device 1. When this occurs, the electronic control unit activates the signalling unit 25, in which the further lighting element 27 consequently lights up.

In an embodiment that is not shown, the signalling unit 25 comprises an acoustic signaller, of known type, which is actuated when the device 1 is full to more than 95% of the respective capacity.

In another embodiment that is not shown, when the device 1 is full to about 100% of respective capacity, the electronic control unit acts on blocking means, of known type, which prevent the user from inserting the bottles 2 into the device 1, for example preventing the casing 5 and/or the rotating support 7 and/or the groups 306 of the radial support 300 from rotating, or blocking the door of the inlet opening 9 in a closed position.

In use, a user who wants to insert one or more bottles 2 into the device 1 is first identified by the identifying unit 10. This is achieved by means of a card provided with a magnetic band (not shown), which is inserted by the user into a slot 13 of the identifying unit 10. Inside the identifying unit 10, personal data relating to the user and contained in the magnetic band are read and sent to the electronic control unit. The latter automatically associates the data relating to the identified user with the time and date in which identification occurred.

Once he has been identified, the user can start to deliver the bottles 2, by inserting in sequence the latter, through the inlet opening 9, onto as many arms 12 of one of the pans 8, or by inserting the bottles 2 inside one or more tubular elements 302 and/or further tubular elements 305. If necessary, the user can rotate manually the casing 5 in a clockwise, or anticlockwise direction, in such a way that the inlet opening 9 is positioned near one of the supports 7. Each of these can in turn be rotated manually in a clockwise, or anticlockwise direction, in order to enable the user to reach the arms 12 easily. When the device 1 is equipped with the radial support 300, the groups 306 of the latter can be rotated, in a clockwise or anticlockwise direction, so as to make the partially or completely empty tubular elements 302 and/or further tubular elements 305 reachable through the inlet opening 9.

For each inserted bottle 2, the load cell 11 of the corresponding support 7, or of the corresponding group 306, is deformed through the effect of the weight of the bottle 2 and generates a corresponding electric signal, which is sent to the electronic control unit and is amplified and translated into a weight measurement therein. It is possible that the user does not find a sufficient number of free arms 12 in a single support 7, or a sufficient number of tubular elements 302 and/or further tubular elements 305 in a single group 306, and consequently he has to place the bottles 2 in more supports 7, or in more groups 306. Therefore, all the electric signals produced by the load cells 11, and therefore all the detected weight increments, are associated with the last user who has been identified in order of time.

In this way, the total weight of all the bottles 2 that have been delivered by a single user at a certain time and date is associated with that user.

After introducing and positioning the last bottle 2, the user recovers the card by extracting the latter from the slot 13, and this action is read by the electronic control unit as a signal showing the end of the delivery operation performed by the user.

If the user is not able to deliver al the respective bottles 2 into a same device 1, he can repeat the identifying procedure at another device 1 and insert into the latter the remaining bottles 2.

In an embodiment that is not shown, the electronic control unit determines the total weight of the bottles 2 delivered by a user, but it does not associate with the latter the determined total weight.

In another embodiment that is not shown, the identifying unit 10 comprises a numeric, or alphanumeric, keyboard, by ways of which the user types manually a code, or a password, in order to use the device 1.

In a further embodiment that is not shown, the identifying unit 10 comprises a reader that is able to read a smart card of known type, which is a miniaturized electronic circuit.

In a further other embodiment that is not shown, the identifying unit 10 comprises a transponder reader, of known type. The transponder, which can be put, for example, in a shell of small dimensions made of plastics, is given to the user and contains an identification code. When the user arrives near the device 1, for example at a distance of about 25-30 centimetres, the reader produces an electromagnetic field that activates the transponder. The activated transponder transmits the data relating to the user to the reader comprised in the identifying unit 10, which sends the code to the electronic control unit.

In a still further embodiment that is not shown, the identifying unit 10 comprises an optoelectronic device of known type, for example a barcode optic reader. In this case, the user is provided with a tag, or card, on which a specific bar code is printed. Once he arrives at the device 1, the user displays the barcode to the reader, which reads and sends to the electronic control unit the data relating to the user.

Once a delivery operation has been completed by an identified user and after the total weight of the bottles 2 has been memorised and associated with this user, the electronic control unit turns the signals produced by the load cells 11 into a nil value. Consequently, when a further identified user inserts into the device 1 other bottles 2 which further deform the load cells 11, the new signals produced by the load cells 11 actually correspond to the weight increments produced by the bottles 2 that have been delivered by the further identified user.

The electronic control unit, even though it performs the above-mentioned zero setting procedure after each identified user has delivered the respective bottles 2, however keeps in memory and updates in real time the value of the total weight produced by all the bottles 2 in the device 1. In this way, the electronic control unit is able to detect when the device 1 is full to more than 75% of the respective capacity and then to activate the signalling unit 25, in which the further lighting element 27 lights up showing the user that the device 1 is "full up" and cannot receive further bottles 2.

If a user is not identified by the identifying unit 10, for example because he lacks the card, the bottles 2 can be inserted into the device 1 anyway, but the electronic control unit does not associate with the (not identified) user the weight produced by the bottles 2 inserted by the user.

The electronic control unit is managed by a computer program, which enables a new file to be created every time a user is identified and delivers a certain amount of bottles 2. Each file comprises some data, as it is shown in the Table 1 reported below.

**Table 1**

| **Recorded Data** | **Meaning of Data** |
|---|---|
| Time and date of identification of the user | Start of delivery of glass bottles |
| Sum of weight increments recorded by load cells | Total weight of glass bottles delivered by the user |
| Retrieval of the card by the user (or any equivalent action) | Stop of delivery of glass bottles |

Each file, once created and assigned to a certain user, is saved in the electronic control unit and is kept in memory in the latter until the device 1 is removed by operators, conveyed to a glass recycling plant and emptied.

In this step, the operators can remove the electronic control unit and/or connect the latter to a computer, into which the files are downloaded. The data contained in the files are transmitted to the competent authority, which decides and dispenses to each user a corresponding benefit, for example a percentage reduction of the charges due for solid urban waste disposal.

If the embodiment of the device 1 is used in which the electronic control unit determines the weight of the bottles 2 delivered by a user but does not associate the total determined weight with the user, the created file is not assigned to any user.

In this case, the competent public authority can record the total weight of glass solid waste delivered by the users during a given period of time, but it does not dispense any benefit to the users.

In an embodiment that is not shown, the electronic control unit of the device 1 is connected via cable with operational headquarters and the files, which have been created during the delivering operations of the various users, are sent in real time to this operational headquarters, which manages the data and transmits the latter to the competent authority.

In another embodiment that is not shown, the electronic control unit of the device 1 is connected to the operational headquarters through a wireless connection of known type.

In a further embodiment that is not shown, the electronic control unit of the device 1 sends a specific signal to the operational headquarters, through a cable connection or wireless connection, when the device 1 is full for about 75% of the respective capacity. In response, the operational headquarters signals to the operators to remove and empty the device 1 within a preset maximum time (for example, three days). In order to empty the device 1 provided with the supports 7, the casing 5 is temporarily removed and the bottles 2 are removed from the supports 7. In order to empty the device 1 equipped with the radial support 300, after removing the casing 5 the groups 306 are removed in sequence from the stay rod 4. Then the bottles 2 are extracted from the tubular elements 302 and/or further tubular elements 305.

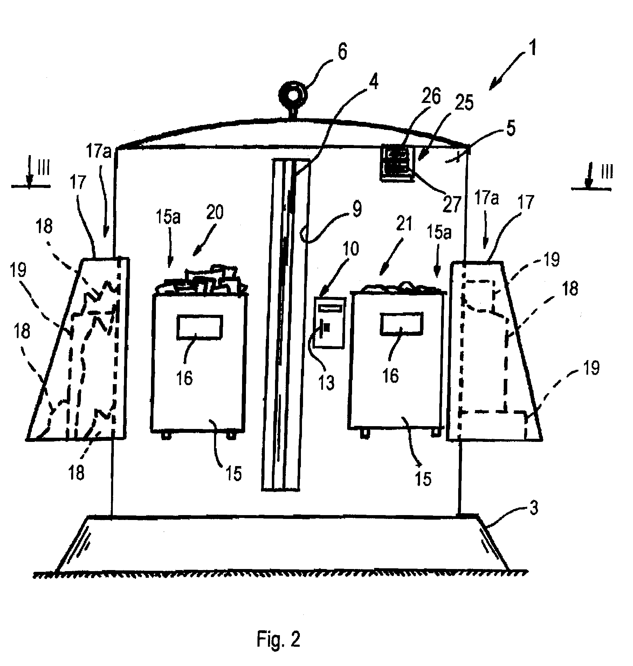

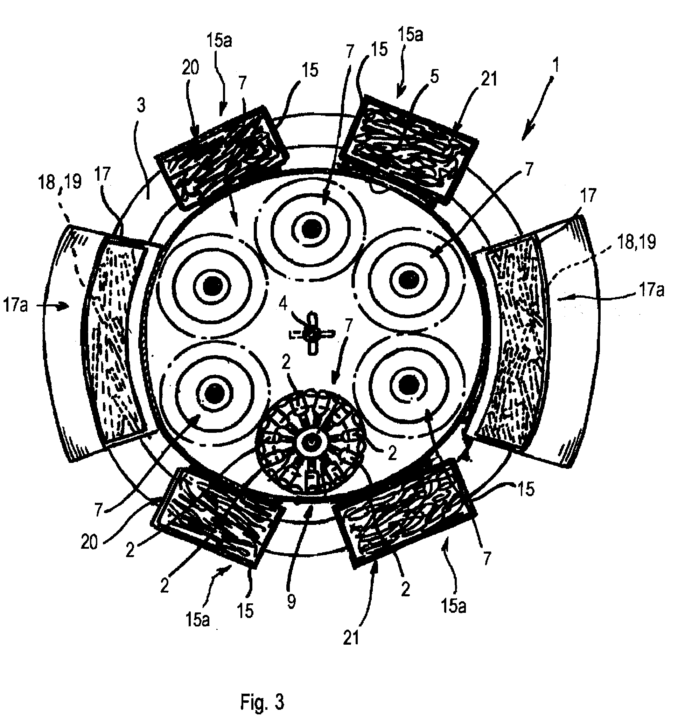

With reference to Figure 2 and 3, an embodiment of the device 1 is provided further comprising a plurality of box containers 15 and further box containers 17, which are fixed to the outer surface of the casing 5 through fixing means of known type (not shown).

Each box container 15 substantially has the shape of a hollow parallepipedon. In a face of the box container 15, which is turned, in use, in a direction that is opposite the base 3 of the device 1, an opening 15a is obtained. Through the latter, plastics bags 21 or paper bags and/or folded cardboard boxes 20 can be inserted in each box container 15. On a further face of each box container 15, which is turned, in use, in a direction that is opposite the casing 5 of the device 1, a label 16 is applied, for example by gluing, which label shows the type of material that can be discharged therein.

In an embodiment that is not shown, the box containers 15 are provided with convex faces.

Owing to the box container 15, a user who carried the bottles 2 to the device 1 using a bag made of plastics, paper or other material, can, after emptying the bag, discharge the latter directly into the device 1 and does not need to reach a container for urban solid waste or a container for separate collection.

In an embodiment that is not shown, the box containers 15 are made in a coloured material (for example plastics), or are painted with a pigment of a preset colour, according to the type of material dischargeable therein. In this way, the user can immediately recognize into which of the box containers 15 he can insert the bags and/or boxes.

Each further box container 17 has the approximate shape of a hollow prism, having a longitudinal section shaped as a rectangle trapezium and an arched cross section. The latter is made so as to enable the further box container 17 to partially surround the casing 5. In a face of the further box container 17, which is turned, in use, in a direction that is opposite the base 3 of the device 1, an opening 17a is obtained. Through the latter, plane glass or crystal glass slides 19 and/or fragments 18 of plane glass or crystal glass can be inserted into the further box containers 17 (shown by means of a broken line).

In an embodiment that is not shown, the arched cross section of the further box container 17 is made so as to enable the latter to surround at least a half of the casing 5.

The glass objects having shape and/or dimensions that are different from bottles 2, and which thus cannot be inserted inside the device 1, can be inserted into the further box container 17. This prevents the plane glass or crystal glass scrap, such as the slides 19 and/or the fragments 18 of the latter, from being left outside the device 1 and being a hindrance or a potential risk of accident for the operators who have to remove and convey the device 1.

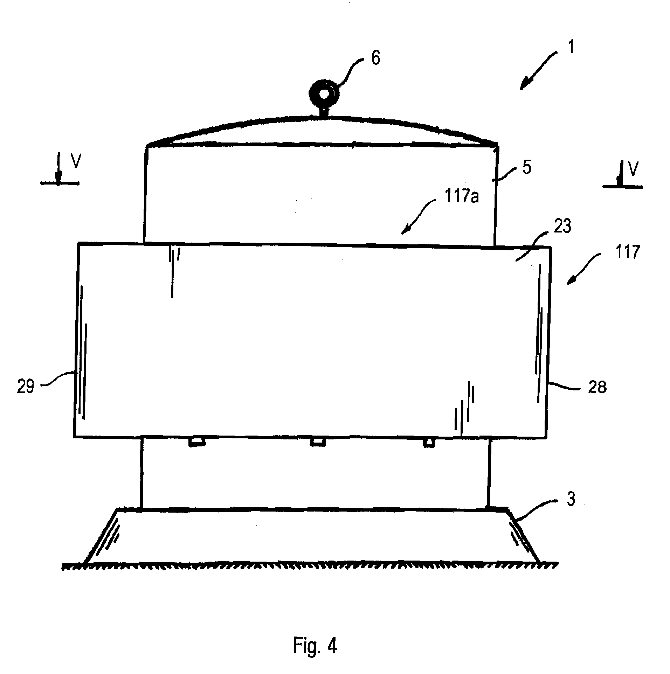

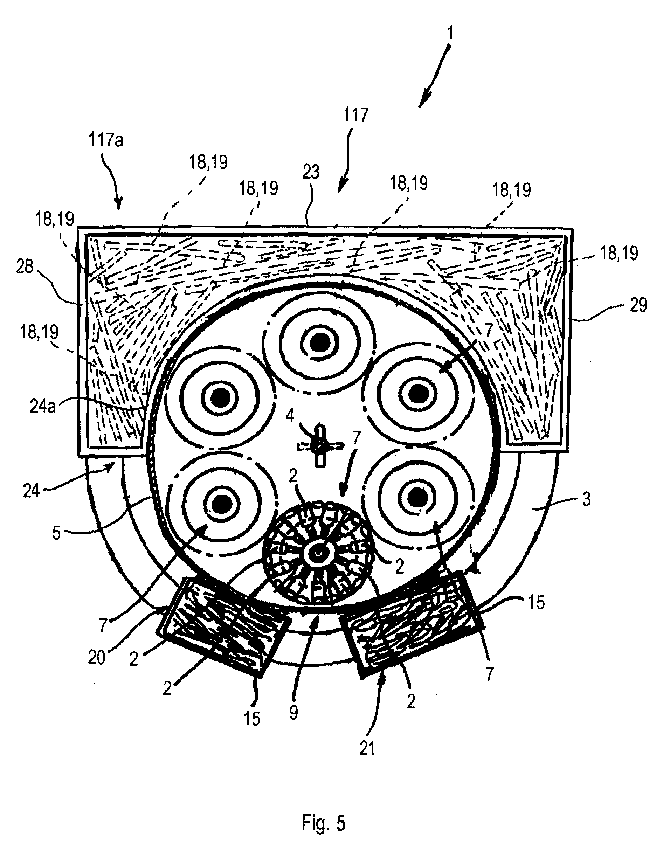

With reference to Figure 4 and 5, an embodiment is provided of the further box container, indicated with the number 117, which has an approximately C-shaped cross section. The further box container 117 comprises a first wall 24, in which a concave portion 24a is obtained, a rectilinear wall 23 and a pair of side walls 28, 29, which are interposed between the rectilinear wall 23 and the first wall 24. The concave portion 24a is made so as to enable the first wall 24 to surround about a half of the casing 5 when the further box container 117 is fixed outside the casing 5.

The side walls 28, 29 are mutually parallel and orthogonal with respect to the rectilinear wall 23. The first wall 24, the rectilinear wall 23 and the side walls 28, 29 define, in the further box container 117, an opening 117a, which is turned in a direction that is opposite the base 3 of the device 1.

The above disclosed embodiment of the further box container 17 is particularly capacious and is able to easily contain the sheet 19 even when the latter are significantly extended in length.

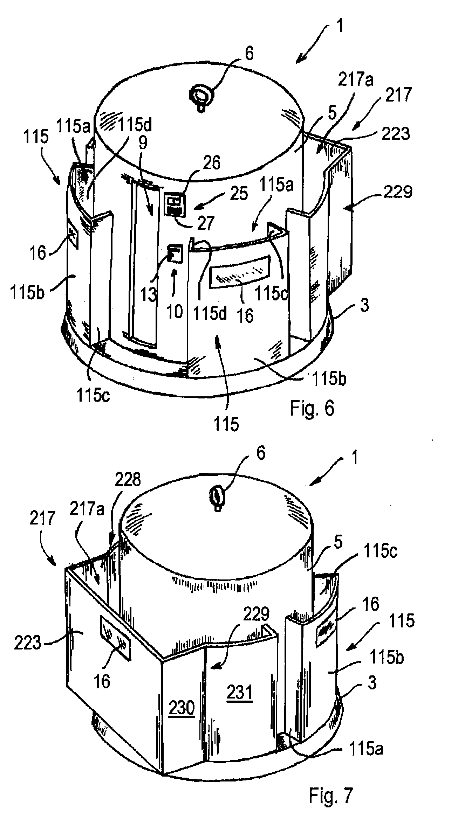

Figures 6 and 7 show a device 1 provided with a further embodiment of the further box container, indicated by the number 217, and with an embodiment of the box container, indicated by the number 115.

The box container 115 has an approximately C-shaped cross-section and comprises a curved wall 115b, a pair of side walls 115c, 115d and a bottom wall (not shown). When the box container 115 is mounted on the casing 5 of the device 1, the curved wall 115b, the side walls 115c, 115d and an adjacent portion of the casing 5 define an opening 115a facing in the opposite direction to the base 3 of the device 1, whilst the bottom wall rests on the base 3.

In an embodiment that is not shown, the box container 115 comprises a further wall, opposite the curved wall 115b and arranged for being fixed to the casing 5. The further box container 217 comprises a straight first wall 223, a pair of side walls 228, 229 and a bottom wall (not shown). Each side wall 228, 229 comprises a first portion 230 that is rectilinear and orthogonal with respect to the rectilinear wall 223, and a second portion 231. The latter is initially curved and parallel to the casing 5, and then becomes rectilinear and orthogonal with respect to the first portion 230. When the further box container 217 is fixed to the casing 5, the rectilinear wall 223, the side walls 228, 229 and an adjacent portion of the casing 5 define an opening 217a facing in the opposite direction to the base 3 of the device 1, whilst the bottom wall rests on the base 3.

In an embodiment that is not shown, the further box container 217 comprises a further wall that is opposite the rectilinear wall 223 and arranged for being fixed to the casing 5.

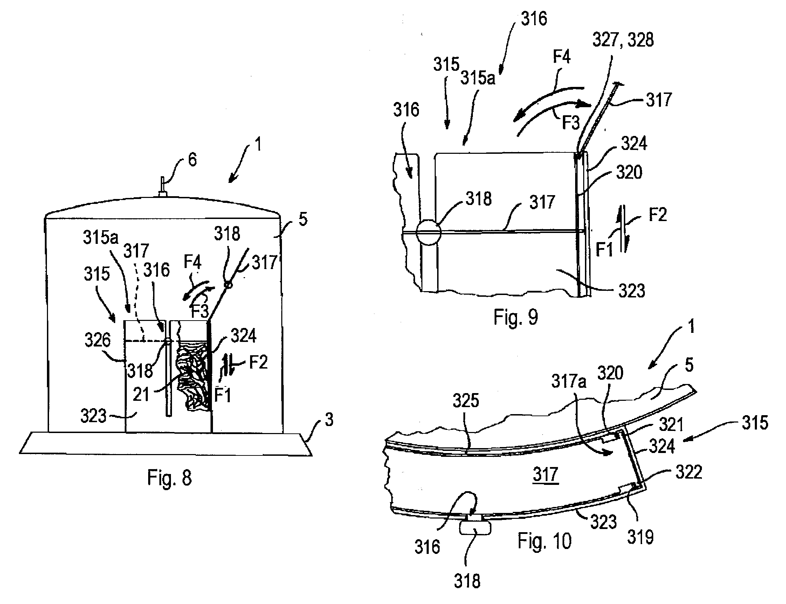

Figures 8, 9 and 10 show a further embodiment of the box container, indicated by number 315, which is provided with a compacting element 317. The box container 315 is approximately parallelepiped-shaped and has a curved cross section, owing to which it can be fixed to the outside of the casing 5 in such a way as to partially surround the latter. The box container 315 comprises a bottom wall (not shown), a first curved wall 323 and a second curved wall 325, that are mutually opposite and parallel, and a pair of rectilinear walls 324, 326, which are interposed between the first curved wall 323 and the second curved wall 325. The first curved wall 323, the second curved wall 325, and the pair of rectilinear walls 324, 326, define an opening 315a facing in a direction opposite the base 3 of the device 1. In an approximately central portion of the first curved wall 323 there is obtained a longitudinal groove 316, which extends vertically and is interrupted near the bottom wall. A pair of guides 319, 320 is obtained respectively in the first curved wall 323 and in the second curved wall 325, near the rectilinear wall 324. The guides 319, 320 are mutually facing inside the box container 315 and are made in the shape of longitudinal slats that project respectively from the first curved wall 323 and from the second curved wall 325 in an orthogonal manner with respect to the latter. In use, the box container 315 is mounted on the casing 5 in such a way that the second curved wall 325 is in contact with an adjacent portion of casing 5 and the bottom wall rests on the base 3.

The compacting element 317 is a plate, which has shape and dimensions that are similar to those of the cross section of the box container 315 and is provided with a tab end 317a that is arranged near the rectilinear wall 324 and partially interposed between the guides 319, 320. The tab end 317a is rectangle-shaped, having a width that is slightly less than the width of the remaining part of the compacting element 317 and equal to the distance between the guides 319, 320. In a portion of the tab end 317a next to the rectilinear wall 324 there is obtained a pair of teeth 321, 322 that are interposed between the rectilinear wall 324 and the pair of guides 319, 320 in such a way as to engage the latter in a sliding manner.

The compacting element 317 is further provided with a grip portion 318 that protrudes externally from the box container 315 through the groove 316 and can be grasped by a user to move the compacting element 317. Owing to the pair of teeth 321, 322, the compacting element 317 can in fact slide vertically along the pair of guides 319, 320, in two opposite directions, indicated by the arrows F1 and F2, and thus be alternatively moved away from the bottom wall and/or moved up to the latter, i.e. be raised and/or lowered.

In use, the compacting element 317 is horizontally arranged in the box container 315 and serves as a lid for the latter. When the compacting element 317 is raised until it reaches the opening 315a, a pair of stops 327, 328 arranged near the opening 315a blocks the pair of teeth 321, 322 and prevents the latter from exiting from the pair of guides 319, 320. The user, still acting on the grip portion 318, can thus rotate the compacting element 317 in the direction indicated by the arrow F3, so as to move the compacting element 317 away from the opening 315a. In this way, the box container 315 is open and the user can insert thereinto the bags made of plastic 21 or the bags made of paper and/or the folded cardboard boxes 20. After discharging this material, the user can rotate the compacting element 317 in a direction that is indicated by the arrow F4 and is opposite the direction F3, so as to move the compacting element 317 up to the opening 315a and to arrange the latter horizontally with respect to the box container 315. The latter is thus shut and the user, by sliding the grip portion 318 along the longitudinal groove 316 in the direction F2, lowers the compacting element 317 that compresses the material contained in the box container 315. The material that has been inserted, after being compacted, occupies a smaller space inside the box container 315 and this enables the capacity of the latter to be exploited in an optimal manner. In an embodiment that is not shown, in a face of the compacting element 317 that is turned, in use, to the bottom wall of the box container 315, a protruding, for example wedge-shaped, portion is provided. In this way, when the user lowers the compacting element 317, the protruding portion compresses and then compacts effectively the material contained in the box container 315.

In another embodiment that is not shown, which is usable in particular for collecting bags made of plastics 21, the box container 315 is made of metal material and comprises walls provided with heating means, for example electric resistances of known type. The heating means enable the bags of plastic 21, which are contained in the box container 315, to be heated to a temperature of 70-80 °C. In this way the bags made of plastics 21 tend to decompose and occupy less space in the box container 315.

## Claims

1. Device for collecting glass containers (2), comprising internal chamber means arranged for receiving said glass containers (2) and communicating with the exterior through inlet opening means (9), **characterised in that** it further comprises external chamber means (15; 115; 315; 17; 117; 217), made outside said internal chamber means and arranged for receiving glass objects (18, 19) different from said glass containers (2) and further objects (20, 21) made of materials different from glass.

2. Device according to claim 1, or 2, wherein said external chamber means (15; 115; 315; 17; 117; 217) comprises at least a box container (15; 115; 315) applied externally to a casing (5) of said device and arranged for containing said further objects (20, 21) made of materials different from glass, said further objects (20, 21) comprising bags made of paper and/or boxes made of cardboard (20) and/or bags made of plastic (21).

3. Device according to any preceding claim, wherein said box container (115) has a substantially C-shaped section.

4. Device according to claim 2, or 3, wherein said box container (315) is provided with compacting means (317) arranged for compacting said bags made of paper and/or boxes made of cardboard (20) and/or said bags made of plastics (21) inside said box container (315).

5. Device according to claim 4, wherein said compacting means (317) comprises a plate-shaped compacting element (317), said compacting element (317) being mounted on said box container (315) in such a way as to enable an opening (315a) obtained in said box container (315) to be alternatively closed and/or opened.

6. Device according to claim 5, wherein said compacting element (317) is provided with tooth means (321, 322) that is arranged for being received in a slidable manner in guide means (319, 320) obtained in said box container (315).

7. Device according to claim 5, or 6, wherein said compacting element (317) is provided with grip means (318), said grip means (318) being partially received in groove means (316) that is obtained in a wall (323) of said box container (315).

8. Device according to any one of claims 5 to 7, wherein said compacting element (317) can be alternatively moved to, or away from, a bottom portion of said box container (315), in such a way as to compact bags made of paper and/or boxes made of cardboard (20) and/or said bags made of plastics (21).

9. Device according to any one of claims 5 to 8, wherein said compacting element (317) is provided with a protruding portion that is arranged for compressing said bags made of paper and/or boxes made of cardboard (20) and/or said bags made of plastics (21).

10. Device according to any one of claims 5 a 9, wherein said box container (315) is provided with heating means, which is arranged for heating said bags made of plastics (21) to a temperature such as to make said bags made of plastic (21) more comfortably compactable.

11. Device according to any preceding claim, wherein said external chamber means (15; 115; 315; 17; 117; 217), comprises at least a further box container (17; 117; 217), which is applied externally to said casing (5) and is arranged for containing said glass objects (18, 19) different from said glass containers (2), said glass objects (18, 19) comprising glass or crystal glass sheets (19) and/or fragments (18) of glass or crystal glass.

12. Device according to claim 11, wherein said further box container (17; 117; 217) has a cross section that is shaped in such a way as to enable said further box container (17; 117; 217) to envelop at least partially said casing (5).

13. Device according to claim 11, or 12, wherein said further box container (17; 117; 217) has a cross section that is at least partially C-shaped.

14. Device according to any preceding claim, wherein said internal chamber means is provided with tubular element means (302; 305), which is arranged in a radial manner and shaped in such a way as to be able to contain said glass containers (2).

15. Device according to claim 14, wherein said tubular element means (302; 305) is fixed peripherally on sleeve elements (301).

16. Device according to claim 15, wherein said sleeve elements (301) are inserted onto rod means (4) in such a way as to be mutually stacked, said rod means (4) being comprised in said internal chamber means.

17. Device according to claim 16, wherein said rod means (4) is arranged near a longitudinal axis of said device.

18. Device according to any one of claims 15 to 17, wherein said sleeve elements (301) together form a rotatable radial support (300) that is comprised in said internal chamber means.

19. Device according to any one of claims 16 to 18, comprising a single sleeve element, extending in length and inserted onto said rod means (4).

20. Device according to any one of claims 14 to 18, wherein said tubular element means (302; 305) comprises first tubular elements (302) and second tubular elements (305), said first tubular elements (302) being fixed to said sleeve elements (301) and extending in length from said sleeve elements (301) to said inlet opening (9).

21. Device according to claim 20, wherein said first tubular elements (302) and said second tubular elements (305) comprise a mutually opposite closed end (302a; 305a) and open end (302b; 305b), said open end (302b; 305b) being such as to enable said glass containers (2) to be alternatively inserted into, or extracted from, said first tubular elements (302) and/or said second tubular elements (305).

22. Device according to claim 20, or 21, wherein said first tubular elements (302) and/or said second tubular elements (305) are made in such a way as to have a diameter comprised between 6 centimetres and 12 centimetres.

23. Device according to any one of claims 20 to 22, wherein said first tubular elements (302) are fixed to said sleeve elements (301) in such a way as to be angularly spaced with respect to one another.

24. Device according to claim 23, wherein said first tubular elements (302) are mutually angularly spaced by about 45°.

25. Device according to any one of claims 20 to 24, wherein said second tubular elements (305) are interposed in a staggered manner between said first tubular elements (302).

26. Device according to claim 25, wherein said second tubular elements (305) are fixed to said first tubular elements (302) in such a way that said open ends (305b) are arranged near said inlet opening (9).

27. Device according to any one of claims 16 to 26, wherein said sleeve elements (301) are gathered to form groups (306) that are inserted on said rod means (4) and mutually separated through spacer means (308).

28. Device according to any one of claims 16 to 28, wherein said sleeve elements (301) can rotate clockwise and/or anticlockwise around said rod means (4).

29. Device according to any preceding claim, wherein in said internal chamber means there is provided weighing means arranged for measuring weight increases that are produced by said glass containers (2) when said glass containers (2) are discharged into sad internal chamber means.

30. Device according to claim 29, as appended to any one of claims 14 to 28, wherein in said weighing means is associated with said tubular element means (302; 305).

31. Device according to any preceding claim, further comprising identifying unit means (10) that is mounted on said casing (5) and is arranged for identifying a user when said user discharges said glass containers (2) in said internal chamber means.

32. Device according to claim 31, as appended to claim 29 or 30, further comprising electronic control unit means that is suitable for interacting with said identifying unit means (10) and/or with said weighing means, and is arranged for associating with said user said weight increases produced by said glass containers (2).

33. Device according to any preceding claim, further comprising signalling means (25, 26, 27) that is arranged for signalling to said user a level of filling of said device.

34. Device according to claim 32, or 33, wherein said control unit means is able to block door means with which said inlet opening (9) is provided in such a way as to prevent said user from discharging said glass containers (2) in said device.

35. Device according to any preceding claim, further comprising vat means, which is obtained inside said base (3) of said device and is arranged for collecting volumes of liquid substances, said liquid substances flowing out of said glass containers (2) when said glass containers (2) are inserted into said device.

36. Device according to any preceding claim, wherein said glass containers (2) comprise bottles (2).

37. Device for collecting glass containers (2), comprising internal chamber means arranged for receiving said glass containers and communicating with the exterior through inlet opening means (9), **characterised in that** said internal chamber means is provided with tubular element means (302; 305) that is arranged in a radial manner and shaped in such a way as to be able to contain said glass containers (2).

38. Device according to claim 37, wherein said tubular element means (302; 305) is fixed peripherally on sleeve elements (301).

39. Device according to claim 38, wherein said sleeve elements (301) are inserted onto rod means (4) in such a way as to be mutually stacked, said rod means (4) being comprised in said internal chamber means.

40. Device according to claim 39, wherein said rod means (4) is arranged near a longitudinal axis of said device.

41. Device according to any one of claims 54 to 56, wherein said sleeve elements (301) together form a rotatable radial support (300) comprised in said internal chamber means.

42. Device according to any one of claims 38 to 41, comprising a single sleeve element extending in length and inserted onto said rod means (4).

43. Device according to any one of claims 37 to 42, wherein said tubular element means (302; 305) comprises first tubular elements (302) and second tubular elements (305), said first tubular elements (302) being fixed to said sleeve elements (301) and extending in length from said sleeve elements (301) to said inlet opening (9).

44. Device according to claim 43, wherein said first tubular elements (302) and said second tubular elements (305) comprise a mutually opposite closed end (302a; 305a) and open end (302b; 305b), said open end (302b; 305b) being such as to enable said glass containers (2) to be alternatively inserted into, or extracted from, said first tubular elements (302) and/or said second tubular elements (305).

45. Device according to claim 44, wherein said closed end (302b; 305b) is cone-shaped.

46. Device according to any one of claims 43 to 45, wherein said first tubular elements (302) and/or said second tubular elements (305) are made in such a way as to have a diameter comprised between 6 centimetres and 12 centimetres.

47. Device according to any one of claims 46 to 45, wherein said first tubular elements (302) are fixed to said sleeve elements (301) in such a way as to be angularly spaced with respect to one another.

48. Device according to claim 47, wherein said first tubular elements (302) are angularly spaced with respect to one another by approximately 45°.

49. Device according to any one of claims 43 to 48, wherein eight of said first tubular elements (302) are provided for each sleeve element (301).

50. Device according to any one of claims 43 to 49, wherein said second tubular elements (305) are interposed in a staggered manner between said first tubular elements (302).

51. Device according to claim 50, wherein said second tubular elements (305) are fixed to said first tubular elements (302) in such a way that said open ends (305b) are arranged near said inlet opening (9).

52. Device according to any one of claims 39 to 51, wherein said sleeve elements (301) are gathered to form groups (306) inserted on said rod means (4) and mutually separated through spacer means (308).

53. Device according to claim 52, wherein said spacer means (308) comprises a plurality of spacer rings (308) that is inserted on said rod means (4) and is interposed between said groups (306).

54. Device according to any one of claims 39 to 53, wherein said sleeve elements (301) can rotate clockwise and/or anticlockwise around said rod means (4).

55. Box container, arranged for receiving objects (20; 21) made of yieldable material, comprising compacting means (317) arranged for compacting said objects (20; 21) inside said box container.

56. Container according to claim 55, wherein said compacting means (317) comprises a plate-shaped compacting element (317), said compacting element (317) being mounted on said box container in such a way as to enable an opening (315a) of said box container to be alternatively opened and/or closed.

57. Container according to claim 56, wherein said compacting element (317) is provided with tooth means (321, 322) that is arranged for being received in a slidable manner in guide means (319, 320), said guide means (319, 320) being obtained in a pair of walls (323, 325) that are mutually parallel and opposite said box container.

58. Container according to claim 56, or 57, wherein said compacting element (317) is provided with grip means (318), said grip means (318) being partially received in groove means (316) that is obtained in said box container.

59. Container according to claim 58, as appended to claim 57, wherein said groove means (316) is obtained in a first wall (323) of said pair of walls(323, 325).

60. Containex according to any one of claims 56 to 59, wherein said compacting element (317) can be alternatively moved to, or away from, a bottom portion of said box container, in such a way as to compact said objects (20; 21).

61. Container according to any one of claims 56 to 60, wherein in said compacting element (317) a protruding portion is obtained that is arranged for compacting said objects (20; 21).

62. Container according to claim 61, wherein said protruding portion is wedge-shaped.

63. Container according to claim 61, or 62, as appended to claim 60, wherein said protruding portion is obtained in a face of said compacting element (317), said face being turned, in use, to said bottom portion of said box container.

64. Container according to any one of claims 55 to 63, wherein said objects (20; 21) comprise objects made of paper or cardboard (20) and/or objects made of plastic (21).

65. Container according to claim 64, wherein said objects made of paper or cardboard (20) comprise bags made of paper and/or boxes made of cardboard (20).

66. Container according to claim 64, or 65, wherein said objects made of plastic (21) comprise bags made of plastics (21).

67. Container according to any one of claims 64 to 66, wherein said box container is provided with heating means that is arranged for heating said objects made of plastic (21) to a temperature such as to make said objects made of plastic (21) more comfortably compactable.

68. Method, comprising:

69. -identifying a user of a device (1) arranged for collecting glass containers (2);

70. -enabling said user to insert a quantity of said glass containers (2) into said device (1);

71. -determining a weight of said quantity.

72. Method according to claim 68, further comprising assigning said weight of said quantity to said user.

73. Method according to claim 69, wherein said assigning said weight enables said user to receive a benefit.

74. Method according to claim 70, wherein said receiving a benefit comprises benefiting from a percentage reduction of a charge due by said user, said percentage reduction being proportional to said weight.

75. Method according to any preceding claim, wherein said identifying is obtained through identifying unit means (10) comprised in said device (1).

76. Method according to claim 72, wherein said identifying comprises reading data relating to said user.

77. Method according to claim 73, wherein said data are contained in magnetic tape means.

78. Method according to claim 74, wherein said data are read through magnetic tape reader means.

79. Method according to any one of claims 73 to 75, wherein said data are contained in smart card means.

80. Method according to claim 76, wherein said data are read by means of smart card reader means.

81. Method according to any one of claims 73 to 77, wherein said data are contained in transponder means.

82. Method according to claim 78, wherein said data are read by means of transponder reader means.

83. Method according to any one of claims 73 to 79, wherein said data are contained in optoelectric means.

84. Method according to claim 80, wherein said optoelectric means comprises barcode means.

85. Method according to claim 80, or 81, wherein said data are read by means of optical reader means.

86. Method according to any one of claims 72 to 82, wherein said identifying requires typing a code through keyboard means that is comprised in said identifying unit means (10).

87. Method according to any one of claims 73 to 83, wherein said identifying comprises associating said data relating to said user with a time and/or date in which said identifying occurred.

88. Method according to claim 84, wherein said associating is obtained through electronic control unit means that is comprised in said device (1).

89. Method according to claim 84, or 85, wherein said associating is obtained through electronic control unit means that is arranged outside said device (1).

90. Method according to any preceding claim, wherein said inserting a quantity of said glass containers (2) in said device (1) comprises positioning said containers (2) on supporting means (7; 300) that is comprised inside said device (1).

91. Method according to claim 87, comprising opening door means, which is comprised in said device (1), before said inserting a quantity of said glass containers (2).

92. Method according to claim 87, or 88, wherein said determining a weight is obtained through load cell means (11) that is comprised in said device (1) and is associated with said supporting means (7; 300).

93. Method according to claim 89, as appended to claim 85 or 86, wherein said determining a weight comprises functionally connecting said load cell means (11) to said electronic control unit means.

94. Method according to any preceding claim, comprising storing a numeric value, expressing said weight, after said determining.

95. Method according to claim 91, as appended to claim 85, or 86, wherein said storing is obtained through said electronic control unit means.

96. Method according to claim 92, or 93, comprising transmitting said numeric value to operational headquarters.

97. Method according to claim 93, as appended to claim 93, comprising transmitting via cable said numeric value from said electronic control unit means to said operational headquarters.

98. Method according to claim 93, or 94, comprising transmitting in wireless mode said numeric value from said electronic control unit means to said operational headquarters.

99. Method according to any preceding claim, comprising determining a filling status of said device (1) and comparing said filling status with a preset threshold value of capacity.

100. Method according to claim 96, as appended to any one of claims 93 to 95, comprising signalling to said operational headquarters when said filling status is greater than said preset threshold value.

101. Method according to claims 96 and 97, as appended to claim 86, wherein said determining a filling status and said signalling to said operational headquarters is obtained through of said electronic control unit means.

102. Method according to claim 97, or 98, wherein said operational headquarters provide for removing and emptying said device (1) in response to said signalling.

103. Method according to any one of claims 96 to 99, comprising further signalling to said user of said device (1) when said filling status is greater than said preset threshold value.

104. Method according to claim 100, wherein said further signalling is obtained through signalling unit means (25) that is comprised in said device (1) and is arranged for emitting a signal that is receivable by said user.

105. Method according to claim 101, wherein said emitting a signal comprises emitting a light signal.

106. Method according to claim 101, or 102, wherein said emitting a signal comprises emitting an acoustic signal.

107. Method according to any one of claims 101 to 103, as appended to claim 86, comprising controlling said signalling unit means (25) through said electronic control unit means.

108. Method according to any one of claims 96 to 104, comprising preventing the use of said device (1) when said filling status is greater than said preset threshold value.

109. Method according to claim 105, as appended to claim 88, wherein said preventing comprises blocking said door means in a closed position.

110. Method according to any preceding claim, wherein said glass containers (2) comprise bottles (2).

111. Programme comprising a code for implementing the method according to claims 68 to 107 when said programme is run by a computer system.

112. Support that is readable by a computer and containing a programme according to claim 108.

113. Computer system in which a programme is loaded or stored according to claim 108.
